(19) Europäisches Patentamt
European Patent Office
Office européen des brevets

(11) **EP 1 351 498 B1**

(12) **FASCICULE DE BREVET EUROPEEN**

(45) Date de publication et mention
de la délivrance du brevet:
**07.04.2010 Bulletin 2010/14**

(51) Int Cl.:
*H04N 5/235* (2006.01)    *H04N 5/225* (2006.01)

(21) Numéro de dépôt: **03290682.8**

(22) Date de dépôt: **18.03.2003**

(54) **Procédé de traitement en temps réel d'un signal représentatif d'une image**

Echtzeitverarbeitungsmethode eines Bildsignales

Real time processing method of an image signal

(84) Etats contractants désignés:
**AT BE BG CH CY CZ DE DK EE ES FI FR GB GR
HU IE IT LI LU MC NL PT RO SE SI SK TR**

(30) Priorité: **29.03.2002 FR 0204170**

(43) Date de publication de la demande:
**08.10.2003 Bulletin 2003/41**

(73) Titulaire: **VALEO VISION
93012 Bobigny Cedex (FR)**

(72) Inventeurs:
• **Fleury, Benoist
94300 Vincennes (FR)**
• **Hue, David
78400 CHATOU (FR)**

(56) Documents cités:
**EP-A- 0 387 817    EP-A- 0 912 047
WO-A-01/39490    FR-A- 2 660 822
US-B1- 6 330 302**

**EP 1 351 498 B1**

**Description**

La présente invention concerne un procédé de traitement en temps réel d'un signal représentatif d'une image, ce signal étant fourni par exemple par des capteurs CCD (capteurs à couplage de charge), des capteurs CMOS (Complementary Metal Oxide Semiconductor) ou des caméras vidéo. Ces capteurs ou caméras seront regroupés dans la présente description sous le terme générique de dispositifs photosensibles.

Les capteurs CCD présentent une excellente sensibilité pour des niveaux d'éclairement faibles. Ils sont par exemple capables de fournir un signal exploitable d'objets ou de scènes dont les niveaux d'éclairement peuvent descendre jusqu'à 0,003 lux.

Cependant, si les objets ou les scènes à observer sont très lumineux, les points élémentaires ou pixels du capteur CCD recevant le plus de lumière sont très rapidement saturés, et on observe alors un phénomène connu dans la technique sous le terme anglo-saxon de « blooming », qui découle d'une exposition plus importante à la lumière que celle qui amène un pixel du capteur à saturation. Les charges générées en excès viennent alors perturber les pixels voisins. Il en résulte ainsi un éblouissement du capteur CCD, et l'image de l'objet très lumineux est inexploitable dans toute la région voisine de cet objet éblouissant. On utilisera dans la présente description le terme d' « éblouissement » pour désigner ce phénomène de blooming.

Les capteurs CMOS sont moins sensibles à ce phénomène d'éblouissement, mais ne peuvent donner de signal exploitable d'objets ou de scènes peux lumineux.

Il est bien connu d'essayer de réduire l'éblouissement en pilotant le capteur ou la caméra, en diminuant le temps d'exposition de chaque image de manière à réduire l'éblouissement des zones très lumineuses. Il en résulte alors que le contraste des zones peu lumineuses est fortement dégradé. Si l'on renforce alors le gain de la caméra pour améliorer la visibilité des faibles niveaux, on augmente également le niveau de bruit dans le signal correspondant aux zones sombres, ce qui se traduit par une image « neigeuse » des zones sombres, dont le rendu est fortement dégradé. Une telle solution ne permet donc pas d'obtenir une dynamique suffisante pour le signal, où il est par exemple souhaitable d'obtenir une image exploitable avec une dynamique de 170 dB entre le signal correspondant aux zones les plus sombres et le signal correspondant aux zones les plus lumineuses de la même image.

Une autre solution est proposée par le document FR-A-2 565 753, qui divulgue un procédé permettant d'asservir la sensibilité d'un dispositif photosensible à transfert de charge, utilisé par exemple dans une caméra de télévision, à l'éclairement qu'il reçoit, pour éviter les effets d'éblouissement et de saturation. Ce procédé consiste à utiliser des drains anti-éblouissement que comporte le dispositif pour évacuer les charges générées par la lumière pendant une première partie de la durée d'analyse de chaque trame. Un dispositif d'asservissement détermine la durée de l'évacuation, en fonction des valeurs du signal vidéo obtenu. Pour évacuer les charges vers les drains anti-éblouissement, qui sont maintenus à un potentiel constant par des électrodes qui les surmontent, une tension pulsée est appliquée simultanément sur les deux électrodes de transfert surmontant chaque élément photosensible du dispositif. Il est prévu une série d'impulsions permettant d'évacuer fraction par fraction la charge accumulée. Cette série d'impulsions est appliquée pendant la durée de l'intervalle de suppression de ligne du signal vidéo afin d'éviter que des couplages parasites ne provoquent des perturbations de ce signal vidéo.

De même, le document EP-A-1 237 363, correspondant au préambule de la revendication 1, divulgue un dispositif de formation d'image à l'état solide comprenant un élément de formation d'images à l'état solide fournissant une pluralité de signaux d'images qui diffèrent les uns des autres par leur temps d'exposition, et des moyens de synthèse de signaux pour synthétiser ces signaux d'image fournis par l'élément de formation d'images à l'état solide, dans lequel au moins l'un des signaux d'images possède un nombre de pixels inférieur au nombre de pixels des autres signaux d'images, dans le but d'augmenter la dynamique des images restituées.

Ces deux dernières solutions impliquent la réalisation et l'utilisation de dispositifs photosensibles spécifiques, qui peuvent ne pas pouvoir s'adapter à toutes les situations, et qui sont d'un prix de revient relativement élevé.

On connaît encore du document FR-A-2 660 822 une caméra à double prise de vue réalisant des images de haute dynamique, comportant un capteur d'image primaire, une source secondaire d'informations d'images correspondant à la même image que celle captée par le capteur d'image primaire, mais selon une sensibilité beaucoup plus faible, et un moyen de combinaison des signaux provenant du capteur d'images primaire et de la source d'informations d'image.

Toutes ces solutions connues sont destinées à augmenter la dynamique des images finales fournies à l'utilisateur, mais n'ont pas comme objectif l'augmentation de la sensibilité de l'image finale. Ainsi, dans le cas où plusieurs images sont capturées de la même scène, le capteur fournissant celle qui a la sensibilité la plus élevée reste toujours dans une gamme de fonctionnement dynamique allant éventuellement jusqu'à la saturation, mais jamais jusqu'au phénomène de blooming ou d'éblouissement.

La présente invention se place dans ce contexte et elle a pour but de proposer un procédé de traitement en temps réel du signal généré par un capteur ou une caméra, pour fournir d'une scène ou d'un objet présentant une dynamique élevée entre le signal correspondant aux zones les plus sombres et le signal correspondant aux zones les plus lumineuses, une image de sensibilité élevée, exempte de zones d'éblouissement et dans laquelle les zones dont la luminosité est inférieure à un seuil prédéterminé soient suffisamment contrastées, le seuil prédéterminé pouvant être ajusté, par exemple en fonction de la luminosité ambiante ou d'autres critères, un tel procédé devant pouvoir être mis en oeuvre sans modification des capteurs ou des caméras existants.

La présente invention a donc pour objet un procédé de traitement en temps réel d'un signal représentatif d'une image généré par au moins un dispositif photosensible pour fournir d'une scène à observer présentant une dynamique élevée entre des signaux correspondant aux zones les plus sombres et ceux qui correspondent aux zones les plus lumineuses une image exempte de zones d'éblouissement, le procédé comportant les étapes consistant à :

- former sur le ou les dispositif(s) photosensible(s) à l'aide d'un système optique une image réelle de la scène à observer,
- piloter le ou les dispositif(s) photosensible(s) pour qu'il(s) génère(nt) par seconde un premier nombre prédéterminé de signaux d'images de la scène à observer,
- recueillir les signaux d'images générés par le ou les dispositif(s) photosensible(s),
- traiter les signaux d'images générés par le ou les dispositif(s) photosensible(s),
- convertir les signaux traités en signaux vidéo,
- délivrer les signaux vidéo à un dispositif d'affichage,
- afficher sur le dispositif d'affichage un deuxième nombre prédéterminé d'images par seconde correspondant aux signaux d'images traités,
- l'étape de pilotage du ou des dispositif(s) photosensible(s) comportant la génération de signaux d'images de la même scène à observer avec au moins une première et une deuxième sensibilités différentes, la première sensibilité étant supérieure à la deuxième,
- l'étape de traitement des signaux générés par le ou les dispositif(s) photosensible(s) comporte elle-même les étapes consistant à :
- déterminer le niveau de luminosité de chaque point élémentaire de l'image ayant la première sensibilité et de chaque point élémentaire de l'image ayant la deuxième sensibilité,
- comparer le niveau de luminosité de chaque point élémentaire de l'image de première sensibilité à un seuil prédéterminé,
- délivrer au dispositif d'affichage, pour chaque point élémentaire de l'image de première sensibilité ayant un niveau de luminosité inférieur au seuil prédéterminé, le signal de l'image de première sensibilité, et
- délivrer au dispositif d'affichage, pour tout autre point élémentaire de l'image de première sensibilité, un signal d'image calculé en fonction des niveaux de luminosité du même point élémentaire dans les images de première sensibilité et de deuxième sensibilité,

les signaux d'images délivrés au dispositif d'affichage ayant, pour chaque point élémentaire, un niveau de luminosité égal à celui du point correspondant de l'image de première sensibilité lorsque ce dernier a un niveau de luminosité inférieur ou égal au seuil prédéterminé.

Selon la présente invention, les signaux d'images délivrés au dispositif d'affichage ont, pour chaque point élémentaire, un niveau de luminosité calculé pour être compris entre les niveaux de luminosité des points correspondants des images de première et de deuxième sensibilités pour les points élémentaires de l'image de première sensibilité dont le niveau de luminosité est supérieur au seuil prédéterminé,

et l'étape de traitement des signaux d'images n'est effectuée que lorsque l'image de première sensibilité présente des zones d'éblouissement, la présence de ces zones d'éblouissement étant déterminée en dénombrant le nombre de points de l'image de deuxième sensibilité dont la luminosité est égale à une valeur prédéterminée, le traitement des signaux d'image n'étant effectué que si ce nombre est supérieur à un seuil prédéterminé.

De manière avantageuse, selon un premier mode de traitement,

- le niveau de luminosité de chaque point de l'image finale correspondant à un point élémentaire de l'image de première sensibilité ayant un niveau de luminosité supérieur au seuil prédéterminé est calculé en fonction du niveau de luminosité du point élémentaire correspondant de l'image de deuxième sensibilité.
- la fonction du niveau de luminosité du point élémentaire de l'image de deuxième sensibilité est de la forme :

$$N_3 = N_2 + (S_1 - S_2) * \frac{(K - N_2)}{(K - S_2)}$$

où :

- $N_2$ est le niveau de luminosité du point élémentaire l'image de deuxième sensibilité correspondant à un point élémentaire de l'image de première sensibilité ayant un niveau de luminosité supérieur au seuil prédéterminé,
- $N_3$ est le niveau de luminosité du point élémentaire l'image finale correspondant à un point élémentaire de l'image de première sensibilité ayant un niveau de luminosité supérieur au seuil prédéterminé,
- $S_1$ est la valeur de seuil prédéterminée pour un point élémentaire de l'image de première sensibilité
- $S_2$ est le niveau de luminosité du point élémentaire de l'image de deuxième sensibilité correspondant à un point de l'image de première sensibilité ayant un niveau de luminosité égal à $S_1$, et
- $K$ est le nombre de niveaux de luminosité différents que le dispositif photosensible est capable de distinguer.

Selon un deuxième mode de traitement :

- les signaux délivrés au dispositif d'affichage ont, pour chaque point élémentaire, un niveau de luminosité

  - égal à celui du point correspondant de l'image de première sensibilité lorsque ce dernier a un niveau de luminosité inférieur à un seuil prédéterminé,
  - égal à une somme pondérée des niveaux de luminosité des points correspondants des images de première et de deuxième sensibilité pour chaque point élémentaire de l'image de première sensibilité dont le niveau de luminosité est supérieur ou égal au seuil prédéterminé.

- pour chaque point élémentaire de l'image de première sensibilité dont le niveau de luminosité est supérieur ou égal au seuil prédéterminé, le niveau de luminosité du signal délivré au dispositif d'affichage est constitué d'environ 30% du niveau de luminosité de l'image de deuxième sensibilité et de 70% du niveau de luminosité de l'image de première sensibilité.
- les signaux d'images délivrés au dispositif d'affichage ont, pour chaque point élémentaire, un niveau de luminosité

  - égal à celui du point correspondant de l'image de première sensibilité lorsque ce dernier a un niveau de luminosité inférieur ou égal au seuil prédéterminé,
  - égal à celui du point correspondant de l'image de deuxième sensibilité lorsque le point correspondant de l'image de première sensibilité a un niveau de luminosité égal à une valeur maximale,
  - calculé pour être compris entre les niveaux de luminosité des points correspondants des images de première et de deuxième sensibilités pour les points élémentaires de l'image de première sensibilité dont le niveau de luminosité est compris entre le seuil prédéterminé et la valeur maximale.

- le niveau de luminosité est calculé à l'aide d'une relation linéaire entre les niveaux de luminosité des points élémentaires correspondants des images de première et de deuxième sensibilités.
- la relation linéaire est de la forme :

$$N_{(P_{3(i,j)})} = \left( N_{(P_{1(i,j)})} * \left( \frac{N_{max} - N_{(P_{1(i,j)})}}{N_{max} - N_s} \right) \right) + \left( N_{(P_{2(i,j)})} * \left( 1 - \frac{N_{max} - N_{(P_{1(i,j)})}}{N_{max} - N_s} \right) \right)$$

où, pour chaque couple de coordonnées i et j d'un point élémentaire :

$P_{1(i,j)}$ est un point élémentaire de l'image de première sensibilité,

$P_{2(i,j)}$ est un point élémentaire de l'image de deuxième sensibilité,

$P_{3(i,j)}$ est un point élémentaire de l'image affichée sur le dispositif d'affichage,

$N_{(P_{1(i,j)})}$ est le niveau de luminosité du point élémentaire $P_{1(i,j)}$,

$N_{(P_{2(i,j)})}$ est le niveau de luminosité du point élémentaire $P_{2(i,j)}$,

$N_{(P_{3(i,j)})}$ est le niveau de luminosité du point élémentaire $P_{3(i,j)}$,

$N_{max}$ est le niveau de luminosité maximal de l'image de première sensibilité, et

$N_s$ est le niveau de luminosité du seuil prédéterminé.

Quel que soit le mode de réalisation, selon un premier mode de réalisation :

- le dispositif photosensible est unique, et fonctionne à une fréquence qui est un multiple entier de celle à laquelle les images sont affichées sur le dispositif d'affichage.
- l'image de première sensibilité est générée par le dispositif photosensible ayant un fonctionnement nominal, et en ce que l'image de deuxième sensibilité est générée par le dispositif photosensible ayant un fonctionnement modifié.
- l'image de deuxième sensibilité est sous exposée.
- la sous-exposition est obtenue par un pilotage électronique du dispositif photosensible, ou par un obturateur présentant deux ouvertures inégales présentées successivement devant le dispositif photosensible en synchronisme avec ses périodes de fonctionnement nominal et ses périodes de fonctionnement modifié.

Selon un deuxième mode de réalisation :

- les images de première et de deuxième sensibilités sont obtenues à l'aide de dispositifs photosensibles distincts.
- les dispositifs photosensibles sont synchronisés pour fournir aux moyens de traitement du signal d'images des signaux d'images comportant des points élémentaires qui peuvent être mis en correspondance à la fois dans le temps et dans l'espace.
- les dispositifs photosensibles distincts sont de même technologie, l'un ayant des caractéristiques nominales de fonctionnement, pour donner une image de première sensibilité, l'autre ayant des caractéristiques de fonctionnement modifiées, pour fournir une image de deuxième sensibilité.
- l'image de deuxième sensibilité est obtenue par un pilotage électronique du dispositif photosensible pour obtenir une image sous-exposée.
- les dispositifs photosensibles distincts sont de technologies différentes et fournissent des images de sensibilités différentes.

De manière avantageuse, dans tous les cas, on pourra prévoir que :

- lorsque l'image de première sensibilité est exempte de zones d'éblouissement, le signal d'image délivré au dispositif d'affichage est celui de l'image de première sensibilité,
- la luminosité de la scène à observer est mesurée par un détecteur,
- le détecteur est constitué par un compteur du nombre de points élémentaires de l'image de deuxième sensibilité dont la luminosité est égal à une valeur prédéterminée.

D'autres buts, caractéristiques et avantages de la présente invention ressortiront clairement de la description qui va maintenant être faite d'un exemple de réalisation donné à titre non limitatif, en référence aux dessins annexés sur lesquels :

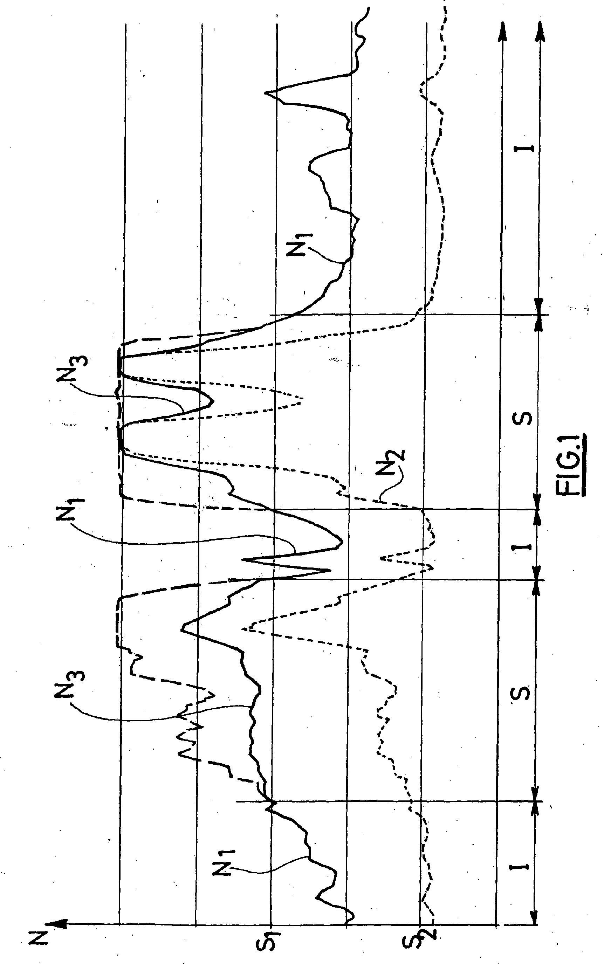

- la Figure 1 représente un diagramme d'une ligne d'une image perçue par un capteur CCD et ses différentes étapes de traitement.

Un dispositif de visualisation d'images comporte de manière conventionnelle un système optique formant d'une scène ou d'un objet à observer une image réelle sur un dispositif photosensible. Un tel dispositif photosensible est de manière connue composé d'une matrice d'éléments photosensibles, chaque élément photosensible générant un signal électrique proportionnel à l'intensité lumineuse qu'il reçoit. Les signaux électriques générés par chaque élément photosensible sont alors transmis, par l'intermédiaire d'un dispositif de traitement des signaux, à un dispositif d'affichage, pour être visualisés sur un écran par un observateur.

Lorsque l'intensité lumineuse de la lumière frappant l'un des éléments photosensibles est comprise dans la plage de valeurs que peuvent restituer correctement ces éléments photosensibles, le signal d'image est exploitable directement.

Lorsque l'intensité lumineuse de la lumière frappant l'un des éléments photosensibles s'élève jusqu'à atteindre une valeur prédéterminée, l'élément photosensible génère un signal électrique maximal, correspondant à sa saturation. Si l'intensité lumineuse continue de croître, on observe alors le phénomène dit de « blooming », dans lequel l'élément photosensible génère des charges en excès qui viennent alors perturber les éléments photosensibles voisins dans la matrice d'éléments photosensibles constituant le dispositif photosensible. Il en résulte que le dispositif d'affichage reçoit à son tour un signal comportant des composantes atteignant une valeur maximale pour certains points de l'image à restituer, et pour les points voisins de ces points éblouissants.

Sur l'image restituée par l'écran d'affichage, il existe alors une zone étendue entourant les points éblouissants proprement dits, et dans laquelle plus aucun détail n'est perceptible, bien que dans la scène originale, les points correspondants n'émettaient qu'une intensité lumineuse tout à fait acceptable par l'élément photosensible sur lequel le système optique formait l'image de ce point. En d'autres termes, un objet très lumineux dont la taille apparente représente par exemple une surface de N pixels sera visualisé par le dispositif d'affichage comme une surface de M pixels, avec M très supérieur à N.

C'est ce que l'on a représenté sur la Figure 1. Sur cette Figure, la courbe inférieure en pointillés représente le signal théorique qui serait généré par un capteur parfait, et la courbe supérieure en tiretés représente le signal réel généré par un capteur CCD. On voit sur cette Figure que, au voisinage des zones où le signal théorique atteint un niveau maximal, le signal réel présente un niveau maximal masquant ainsi des zones où il peut être important de disposer d'informations.

La présente invention se propose de résoudre ce problème. Conformément à un premier mode de réalisation de la présente invention, le dispositif photosensible sur lequel est formée l'image réelle de la scène à observer est piloté de manière à fournir des signaux d'images à une fréquence deux fois supérieure à celle à laquelle les images sont affichées sur le dispositif d'affichage final. Pour chaque image finale affichée, on dispose donc de deux images sources. Par exemple, si les images affichées sur le dispositif d'affichage sont à une cadence de 25 images par seconde, le dispositif photosensible sera commandé pour capter 50 images par seconde.

Selon la présente invention, on prévoit que l'une de ces deux images soit celle qui soit générée à partir des signaux d'image engendrés par le dispositif photosensible lorsqu'il est alimenté selon ses caractéristiques nominales de fonctionnement. Cette image finale est donc optimale pour les points du dispositif photosensible recevant un flux lumineux faible. Mais cette première image peut également contenir des zones d'éblouissement, provenant d'une part des éléments photosensibles recevant un flux lumineux trop important, et d'autre part des éléments photosensibles voisins de ces derniers. Ces différents points donnent alors naissance à une zone de l'image finale illisible autour du ou des points émettant un flux lumineux important. Cette première image peut donc être appelée « image sensible » ou « image claire ». La courbe supérieure de la Figure 1 en tiretés représente une ligne de cette image claire.

L'autre image est celle qui est générée à partir des signaux d'image engendrés par le dispositif photosensible lorsqu'il est alimenté selon des caractéristiques de fonctionnement modifiées. Plus précisément, cette deuxième image est sous-exposée, de sorte que les points éblouissants de la première image sont visibles nettement, de même que leur voisinage immédiat. Par contre, les points contenus dans les zones faiblement éclairées sont plus difficilement perceptibles. Cette deuxième image peut donc être appelée « image peu sensible » ou « image sombre ». Une telle sous-exposition peut être obtenue par exemple par un pilotage électronique du dispositif photosensible, ou par un obturateur présentant deux ouvertures inégales présentées successivement devant le dispositif photosensible. La courbe inférieure en pointillés de la Figure 1 représente une ligne de cette image sombre, correspondant aux mêmes points que ceux de l'image claire.

Selon la présente invention, l'image finale exempte de zones d'éblouissement est obtenue à partir des caractéristiques de l'image claire et de l'image sombre. De manière plus précise, des moyens de traitement du signal analysent en temps réel les signaux représentatifs de l'image claire et de l'image sombre telles qu'elles viennent d'être définies, et plus particulièrement ils déterminent leur niveau de luminosité.

Selon le niveau de luminosité d'un point élémentaire de l'image claire, les moyens de traitement calculent le niveau de luminosité que devra avoir le point élémentaire correspondant de l'image finale, affichée sur le dispositif d'affichage.

Selon un premier mode de traitement du signal :

- on détermine préalablement, pour tout point élémentaire de l'image finale, une valeur de seuil $S_1$ prédéterminé du niveau de luminosité $N_1$ du point correspondant de l'image claire, et une valeur de seuil $S_2$ prédéterminé du niveau de luminosité $N_2$ du point correspondant de l'image sombre, par exemple à l'aide d'une table de correspondance,
- si le niveau de luminosité $N_1$ d'un point élémentaire de l'image claire est inférieur à la première valeur de seuil prédéterminée $S_1$, par exemple 150 si le niveau maximal est égal à 255, le niveau de luminosité $N_3$ du point élémentaire correspondant de l'image finale sera celui du point élémentaire correspondant de l'image claire,
- si le niveau de luminosité $N_1$ d'un point élémentaire de l'image claire est supérieur à la première valeur de seuil prédéterminée $S_1$, 150 dans l'exemple choisi, le niveau de luminosité $N_3$ du point élémentaire correspondant de l'image finale sera calculé en fonction du niveau de luminosité du point élémentaire correspondant de l'image sombre $N_2$.

On obtient ainsi une image finale, représentée sur la Figure 1 par la courbe en traits pleins. On peut par exemple calculer le niveau de luminosité $N_3$ d'un point élémentaire de l'image finale à l'aide d'une fonction du niveau de luminosité $N_2$ du point élémentaire de l'image sombre pour tout point élémentaire de l'image claire ayant un niveau de luminosité $N_1$ supérieur à la première valeur de seuil prédéterminée $S_1$.

De préférence, pour ne pas alourdir les calculs effectués en temps réel, la fonction des niveaux de luminosité des points élémentaires de l'image sombre correspondant à des points élémentaires de l'image claire dont le niveau de luminosité est supérieur à la première valeur de seuil prédéterminée $S_1$ sera une fonction linéaire. Si le dispositif photosensible est capable de distinguer K niveaux de luminosité différents, une telle fonction pourra par exemple être de la forme :

$$N_3 = N_2 + \left(S_1 - S_2\right) * \frac{\left(K - N_2\right)}{\left(K - S_2\right)}$$

Un tel mode de calcul donne les résultats représentés sur la Figure 1. Pour les points de l'image claire dont le niveau de luminosité est égal à la première valeur de seuil prédéterminée $S_1$, les points correspondants de l'image sombre ont un niveau de luminosité $S_2$.

Les points de l'image claire dont le niveau de luminosité est inférieur à la première valeur de seuil prédéterminée $S_1$ sont conservés pour former les points correspondants de l'image finale. Ces points sont situés dans les régions I de la Figure 1.

Les points de l'image claire dont le niveau de luminosité est supérieur à la première valeur de seuil prédéterminée $S_1$ sont remplacés par des points correspondants de l'image sombre dont la luminosité a été augmentée, par exemple selon la fonction ci-dessus. Ces points sont situés dans les régions S de la Figure 1, sur les courbes intermédiaires.

Selon un deuxième mode de traitement du signal :

- si le niveau de luminosité d'un point élémentaire de l'image claire est égal à une valeur maximale, par exemple 255, le niveau de luminosité du point élémentaire correspondant de l'image finale sera celui du point élémentaire correspondant de l'image sombre,
- si le niveau de luminosité d'un point élémentaire de l'image claire est inférieur ou égal à une valeur de seuil prédéterminée, le niveau de luminosité du point élémentaire correspondant de l'image finale sera celui du point élémentaire correspondant de l'image claire, et
- si le niveau de luminosité d'un point élémentaire de l'image claire est supérieur à la valeur de seuil prédéterminée, le niveau de luminosité du point élémentaire correspondant de l'image finale sera calculé en fonction des niveaux de luminosité des points élémentaires correspondants de l'image claire et de l'image sombre.

De préférence encore, pour ne pas alourdir les calculs effectués en temps réel, la fonction des niveaux de luminosité des points élémentaires correspondants de l'image claire et de l'image sombre sera une fonction linéaire. Elle pourra être par exemple de la forme :

$$N_{(P_{3(i,j)})} = \left( N_{(P_{1(i,j)})} * \left( \frac{N_{max} - N_{(P_{1(i,j)})}}{N_{max} - N_s} \right) \right) + \left( N_{(P_{2(i,j)})} * \left( 1 - \frac{N_{max} - N_{(P_{1(i,j)})}}{N_{max} - N_s} \right) \right)$$

où, pour chaque couple de coordonnées i et j :

$P_{1(i,j)}$ est un point élémentaire de l'image claire,

$P_{2(i,j)}$ est un point élémentaire de l'image sombre,

$P_{3(i,j)}$ est un point élémentaire de l'image affichée sur le dispositif d'affichage,

$N_{(P_{1(i,j)})}$ est le niveau de luminosité du point élémentaire $P_{1(i,j)}$,

$N_{(P_{2(i,j)})}$ est le niveau de luminosité du point élémentaire $P_{2(i,j)}$,

$N_{(P_{3(i,j)})}$ est le niveau de luminosité du point élémentaire $P_{3(i,j)}$,

$N_{max}$ est le niveau de luminosité maximal de l'image claire, et

$N_s$ est le niveau de luminosité du seuil prédéterminé.

De la sorte, quel que soit le mode de traitement du signal, les niveaux de luminosité des points élémentaires de l'image finale sont ajustés en permanence, de manière à conserver la meilleure sensibilité dans les zones de l'image où les niveaux de luminosité sont inférieurs à un seuil prédéterminé, et de manière à améliorer la visibilité des zones proches de sources éblouissantes, et dont le niveau de luminosité est supérieur à ce seuil prédéterminé.

On pourra avantageusement prévoir que le seuil prédéterminé de niveau de luminosité de l'image claire soit réglable, par exemple de manière continue, de manière à pouvoir tenir compte par exemple de la luminosité ambiante, de différentes conditions atmosphériques, etc...

Une variante possible de ce deuxième mode de traitement du signal consiste à délivrer au dispositif d'affichage, pour chaque point élémentaire, un niveau de luminosité

- égal à celui du point correspondant de l'image claire lorsque ce dernier a un niveau de luminosité inférieur à un seuil prédéterminé,
- égal à une somme pondérée des niveaux de luminosité des points correspondants des images claire et sombre pour chaque point de l'image claire dont le niveau de luminosité est supérieur ou égal au seuil prédéterminé.

Différents essais ont montré qu'un bon résultat était obtenu lorsque la luminosité du point de l'image finale était voisine de 30% de la luminosité de l'image sombre et de 70% de celle de l'image claire.

Selon un deuxième mode de réalisation de la présente invention, les images de sensibilités différentes sont obtenues à l'aide de dispositifs photosensibles distincts. On peut par exemple prévoir que l'image réelle de la scène à observer soit formée sur deux dispositifs photosensibles différents, par exemple par une lame semi-transparente inclinée à 45 degrés sur l'axe optique du système optique formateur d'image. Les deux dispositifs photosensibles sont de préférence synchronisés pour fournir aux moyens de traitement du signal d'images des signaux d'images comportant des points élémentaires qui peuvent être mis en correspondance à la fois dans le temps et dans l'espace.

Les deux dispositifs photosensibles ont des sensibilités différentes de manière à fournir des signaux exploitables comme dans le premier mode de réalisation. On pourra par exemple choisir selon une première variante des dispositifs photosensibles de même technologie, par exemple des capteurs CCD, dont l'un a ses caractéristiques nominales de fonctionnement, pour donner une image claire comme dans le premier mode de réalisation, et dont l'autre a ses caractéristiques de fonctionnement modifiées, pour fournir une image sombre comme dans le premier mode de réalisation. Là encore, l'image sombre peut être obtenue par un pilotage électronique du dispositif photosensible pour obtenir une image sous-exposée.

Selon une deuxième variante, on pourra choisir des dispositifs photosensibles de technologies différentes, par exemple un capteur CCD ayant des caractéristiques nominales de fonctionnement pour fournir une image claire, et un capteur CMOS pour fournir une image sombre

Le traitement de ces deux images pour former l'image finale exempte de zones d'éblouissement, selon les deux variantes qui ont été exposées ci-dessus, est identique à celui qui a été exposé pour le premier mode de réalisation, et ne sera donc pas repris en détail.

De manière à optimiser la rapidité du traitement, on peut prévoir de n'effectuer le traitement des signaux d'images que lorsque l'image claire présente des zones d'éblouissement. Un détecteur de luminosité totale de la scène à observer pourrait alors être utilisé à cette fin. Afin de ne pas multiplier le nombre de composants utilisés et la complexité du dispositif, et de ne pas augmenter le coût du traitement, l'invention prévoit d'utiliser à cette fin les caractéristiques de l'image sombre.

Lorsque l'on effectue l'étape de traitement consistant à déterminer le niveau de luminosité de chaque point élémentaire de l'image sombre, il suffit en effet de dénombrer le nombre de points élémentaires de cette image sombre dont la luminosité est égale à une valeur prédéterminée, pour laquelle les points élémentaires seront appelés des points « blancs ». De manière à être sûr que cette image sombre ne sera pas elle-même sujette au phénomène d'éblouissement, on pourra ajuster le gain du capteur ou de la caméra fournissant cette image sombre à une valeur prédéterminée pour que les charges générées par ces points blancs ne viennent pas perturber les points élémentaires voisins.

Si le nombre de points blancs de l'image sombre est nul ou faible, c'est à dire inférieur à un seuil prédéterminé $N_1$, on est alors assuré que l'image claire de la même scène n'est pas sujette au phénomène d'éblouissement. Il n'est alors pas nécessaire d'effectuer le traitement du signal qui a été décrit précédemment. Il suffira alors d'utiliser pour l'image finale le signal d'image claire sans lui faire subir de traitement.

Si le nombre de points blancs de l'image sombre est supérieur au seuil prédéterminé $N_1$, le risque existe que l'image claire de la même scène présente le phénomène d'éblouissement. Il est alors nécessaire d'effectuer le traitement du signal qui a été décrit précédemment.

Pour éviter des phénomènes de scintillement lorsque le nombre de points blancs de l'image sombre est voisin du seuil $N_1$, on peut créer un hystérésis dans l'activation du traitement, en prédéterminant un deuxième seuil $N_2$ inférieur

au premier seuil $N_1$. Lorsque le nombre de points blancs de l'image sombre est supérieur au premier seuil $N_1$, alors le traitement du signal est activé. Lorsque le nombre de points blancs de l'image sombre est inférieur au deuxième seuil $N_2$, alors le traitement du signal est inhibé. En choisissant convenablement les valeurs $N_1$ et $N_2$, on sera assuré d'avoir une image finale parfaitement stable.

En variante, on peut également envisager de ne pas effectuer de traitement lorsque le nombre de points blancs est inférieur au deuxième seuil $N_2$, d'effectuer un traitement lorsque le nombre de points blancs est supérieur au premier seuil $N_1$, et d'effectuer un traitement progressif entre ces deux seuils.

On a donc bien réalisé selon la présente invention un procédé de traitement en temps réel du signal généré par un dispositif photosensible, pour fournir d'une scène ou d'un objet présentant une dynamique élevée entre le signal correspondant aux zones les plus sombres et le signal correspondant aux zones les plus lumineuses, une image de grande sensibilité exempte de zones d'éblouissement et dans laquelle les zones dont la luminosité est inférieure à un seuil prédéterminé sont suffisamment contrastées, le seuil prédéterminé pouvant être ajusté, par exemple en fonction de la luminosité ambiante ou d'autres critères. Un tel procédé est mis en oeuvre avec des dispositifs photosensibles qui n'ont pas subi de modification. Il en résulte donc que le procédé selon la présente invention permet d'augmenter dans des proportions importantes la qualité de l'affichage d'images présentant une dynamique élevée, sans augmenter sensiblement le coût du dispositif d'acquisition et de restitution d'images.

Bien entendu, la présente invention n'est pas limitée aux modes de réalisation qui ont été décrits, mais l'homme du métier pourra au contraire lui apporter de nombreuses modifications qui rentrent dans son cadre. C'est ainsi par exemple que l'on pourra prévoir un nombre quelconque de seuils prédéterminés dans l'image claire pour effectuer des traitements de signal différenciés selon les diverses plages de niveaux de luminosité que l'on désire prendre en considération. Il sera ainsi possible d'affiner à volonté le résultat final. Dans ce cas, il sera nécessaire de disposer d'autant d'images de sensibilités différentes. Par exemple, si on fixe deux seuils prédéterminés, il faudra pouvoir disposer de trois images de différentes sensibilités pour fournir une seule image finale.

## Revendications

**1.** Procédé de traitement en temps réel d'un signal représentatif d'une image généré par au moins un dispositif photosensible pour fournir d'une scène à observer présentant une dynamique élevée entre des signaux correspondant aux zones les plus sombres et ceux qui correspondent aux zones les plus lumineuses une image exempte de zones d'éblouissement, le procédé comportant les étapes consistant à :

- former sur le ou les dispositif(s) photosensible(s) à l'aide d'un système optique une image réelle de la scène à observer,
- piloter le ou les dispositif(s) photosensible(s) pour qu'il(s) génère(nt) par seconde un premier nombre prédéterminé de signaux d'images de la scène à observer,
- recueillir les signaux d'images générés par le ou les dispositif(s) photosensible(s),
- traiter les signaux d'images générés par le ou les dispositif(s) photosensible(s),
- convertir les signaux traités en signaux vidéo,
- délivrer les signaux vidéo à un dispositif d'affichage,
- afficher sur le dispositif d'affichage un deuxième nombre prédéterminé d'images par seconde correspondant aux signaux d'images traités,
- l'étape de pilotage du ou des dispositif(s) photosensible(s) comportant la génération de signaux d'images de la même scène à observer avec au moins une première et une deuxième sensibilités différentes, la première sensibilité étant supérieure à la deuxième,
- l'étape de traitement des signaux générés par le ou les dispositif(s) photosensible(s) comporte elle-même les étapes consistant à :
- déterminer le niveau de luminosité de chaque point élémentaire de l'image ayant la première sensibilité et de chaque point élémentaire de l'image ayant la deuxième sensibilité,
- comparer le niveau de luminosité de chaque point élémentaire de l'image de première sensibilité à un seuil prédéterminé,
- délivrer au dispositif d'affichage, pour chaque point élémentaire de l'image de première sensibilité ayant un niveau de luminosité inférieur au seuil prédéterminé, le signal de l'image de première sensibilité, et
- délivrer au dispositif d'affichage, pour tout autre point élémentaire de l'image de première sensibilité, un signal d'image calculé en fonction des niveaux de luminosité du même point élémentaire dans les images de première sensibilité et de deuxième sensibilité.

les signaux d'images délivrés au dispositif d'affichage ayant, pour chaque point élémentaire, un niveau de luminosité

égal à celui du point correspondant de l'image de première sensibilité lorsque ce dernier a un niveau de luminosité inférieur ou égal au seuil prédéterminé,

**caractérisé en ce que** les signaux d'images délivrés au dispositif d'affichage ont, pour chaque point élémentaire, un niveau de luminosité calculé pour être compris entre les niveaux de luminosité des points correspondants des images de première et de deuxième sensibilités pour les points élémentaires de l'image de première sensibilité dont le niveau de luminosité est supérieur au seuil prédéterminé,

**et en ce que** l'étape de traitement des signaux d'images n'est effectuée que lorsque l'image de première sensibilité présente des zones d'éblouissement, la présence de ces zones d'éblouissement étant déterminée en dénombrant le nombre de points de l'image de deuxième sensibilité dont la luminosité est égale à une valeur prédéterminée, le traitement des signaux d'image n'étant effectué que si ce nombre est supérieur à un seuil prédéterminé.

2. Procédé selon la revendication 1, **caractérisé en ce que** le niveau de luminosité de chaque point de l'image finale correspondant à un point élémentaire de l'image de première sensibilité ayant un niveau de luminosité supérieur au seuil prédéterminé est calculé en fonction du niveau de luminosité du point élémentaire correspondant de l'image de deuxième sensibilité.

3. Procédé selon la revendication 2, **caractérisé en ce que** la fonction du niveau de luminosité du point élémentaire de l'image de deuxième sensibilité est de la forme :

$$N_3 = N_2 + (S_1 - S_2) * \frac{(K - N_2)}{(K - S_2)}$$

où :

- $N_2$ est le niveau de luminosité du point élémentaire l'image de deuxième sensibilité correspondant à un point élémentaire de l'image de première sensibilité ayant un niveau de luminosité supérieur au seuil prédéterminé,
- $N_3$ est le niveau de luminosité du point élémentaire l'image finale correspondant à un point élémentaire de l'image de première sensibilité ayant un niveau de luminosité supérieur au seuil prédéterminé,
- $S_1$ est la valeur de seuil prédéterminée pour un point élémentaire de l'image de première sensibilité
- $S_2$ est le niveau de luminosité du point élémentaire de l'image de deuxième sensibilité correspondant à un point de l'image de première sensibilité ayant un niveau de luminosité égal à $S_1$, et
- $K$ est le nombre de niveaux de luminosité différents que le dispositif photosensible est capable de distinguer.

4. Procédé selon la revendication 1, **caractérisé en ce que** les signaux délivrés au dispositif d'affichage ont, pour chaque point élémentaire, un niveau de luminosité

- égal à celui du point correspondant de l'image de première sensibilité lorsque ce dernier a un niveau de luminosité inférieur à un seuil prédéterminé,
- égal à une somme pondérée des niveaux de luminosité des points correspondants des images de première et de deuxième sensibilité pour chaque point élémentaire de l'image de première sensibilité dont le niveau de luminosité est supérieur ou égal au seuil prédéterminé.

5. Procédé selon la revendication 4, **caractérisé en ce que**, pour chaque point élémentaire de l'image de première sensibilité dont le niveau de luminosité est supérieur ou égal au seuil prédéterminé, le niveau de luminosité du signal délivré au dispositif d'affichage est constitué d'environ 30% du niveau de luminosité de l'image de deuxième sensibilité et de 70% du niveau de luminosité de l'image de première sensibilité.

6. Procédé selon la revendication 1, **caractérisé en ce que** les signaux d'images délivrés au dispositif d'affichage ont, pour chaque point élémentaire, un niveau de luminosité

- égal à celui du point correspondant de l'image de première sensibilité lorsque ce dernier a un niveau de luminosité inférieur ou égal au seuil prédéterminé,
- égal à celui du point correspondant de l'image de deuxième sensibilité lorsque le point correspondant de l'image de première sensibilité a un niveau de luminosité égal à une valeur maximale,
- calculé pour être compris entre les niveaux de luminosité des points correspondants des images de première et de deuxième sensibilités pour les points élémentaires de l'image de première sensibilité dont le niveau de luminosité est compris entre le seuil prédéterminé et la valeur maximale.

7. Procédé selon la revendication 6, **caractérisé en ce que** le niveau de luminosité est calculé à l'aide d'une relation linéaire entre les niveaux de luminosité des points élémentaires correspondants des images de première et de deuxième sensibilités.

8. Procédé selon la revendication 7, **caractérisé en ce que** la relation linéaire est de la forme :

$$N_{(P_{3(i,j)})} = \left( N_{(P_{1(i,j)})} * \left( \frac{N_{\max} - N_{(P_{1(i,j)})}}{N_{\max} - N_s} \right) \right) + \left( N_{(P_{2(i,j)})} * \left( 1 - \frac{N_{\max} - N_{(P_{1(i,j)})}}{N_{\max} - N_s} \right) \right)$$

où, pour chaque couple de coordonnées i et j d'un point élémentaire :

$P_{1(i,j)}$ est un point élémentaire de l'image de première sensibilité,
$P_{2(i,j)}$ est un point élémentaire de l'image de deuxième sensibilité,
$P_{3(i,j)}$ est un point élémentaire de l'image affichée sur le dispositif d'affichage,
$N_{(P1(i,j))}$ est le niveau de luminosité du point élémentaire $P_{1(i,j)}$,
$N_{(P2(i,j))}$ est le niveau de luminosité du point élémentaire $P_{2(i,j)}$,
$N_{(P3(i,j))}$ est le niveau de luminosité du point élémentaire $P_{3(i,j)}$,
$N_{\max}$ est le niveau de luminosité maximal de l'image de première sensibilité, et
$N_s$ est le niveau de luminosité du seuil prédéterminé.

9. Procédé selon l'une quelconque des revendications 1 à 8, **caractérisé en ce que** le dispositif photosensible est unique, et fonctionne à une fréquence qui est un multiple entier de celle à laquelle les images sont affichées sur le dispositif d'affichage.

10. Procédé selon la revendication 9, **caractérisé en ce que** l'image de première sensibilité est générée par le dispositif photosensible ayant un fonctionnement nominal, et **en ce que** l'image de deuxième sensibilité est générée par le dispositif photosensible ayant un fonctionnement modifié.

11. Procédé selon la revendication 10, **caractérisé en ce que** l'image de deuxième sensibilité est sous exposée.

12. Procédé selon la revendication 11, **caractérisé en ce que** la sous-exposition est obtenue par un pilotage électronique du dispositif photosensible, ou par un obturateur présentant deux ouvertures inégales présentées successivement devant le dispositif photosensible en synchronisme avec ses périodes de fonctionnement nominal et ses périodes de fonctionnement modifié.

13. Procédé selon l'une quelconque des revendications 1 à 8, **caractérisé en ce que** les images de première et de deuxième sensibilités sont obtenues à l'aide de dispositifs photosensibles distincts.

14. Procédé selon la revendication 13, **caractérisé en ce que** les dispositifs photosensibles sont synchronisés pour fournir aux moyens de traitement du signal d'images des signaux d'images comportant des points élémentaires qui peuvent être mis en correspondance à la fois dans le temps et dans l'espace.

15. Procédé selon la revendication 14, **caractérisé en ce que** les dispositifs photosensibles distincts sont de même technologie, l'un ayant des caractéristiques nominales de fonctionnement, pour donner une image de première sensibilité, l'autre ayant des caractéristiques de fonctionnement modifiées, pour fournir une image de deuxième sensibilité.

16. Procédé selon la revendication 15, **caractérisé en ce que** l'image de deuxième sensibilité est obtenue par un pilotage électronique du dispositif photosensible pour obtenir une image sous-exposée.

17. Procédé selon la revendication 13, **caractérisé en ce que** les dispositifs photosensibles distincts sont de technologies différentes et fournissent des images de sensibilités différentes.

18. Procédé selon la revendication 1, **caractérisé en ce que**, lorsque l'image de première sensibilité est exempte de zones d'éblouissement, le signal d'image délivré au dispositif d'affichage est celui de l'image de première sensibilité.

19. Procédé selon la revendication 1, **caractérisé en ce que** la luminosité de la scène à observer est mesurée par un détecteur.

20. Procédé selon la revendication 19, **caractérisé en ce que** le détecteur est constitué par un compteur du nombre de points élémentaires de l'image de deuxième sensibilité dont la luminosité est égal à une valeur prédéterminée.

**Claims**

1. Method for processing in real time of a signal which is representative of an image generated by at least one photosensitive device, in order to provide, of a scene to be observed which has a high level of dynamics between signals corresponding to the darkest areas and those which correspond to the brightest areas, an image which is free from areas of dazzle, the method comprising the steps consisting of:

   - forming a real image of the scene to be observed, on the photosensitive device(s), by means of an optical system;
   - controlling the photosensitive device(s) so that it/they generate(s) per second a predetermined first number of signals of images of the scene to be observed;
   - receiving the signals of images generated by the photosensitive device(s);
   - processing the signals of images generated by the photosensitive device(s);
   - converting the signals processed into video signals;
   - supplying the video signals to a display device;
   - displaying on the display device a second predetermined number of images per second corresponding to the signals of images processed;
   - the step of controlling the photosensitive device(s), comprising the generation of signals of images of the same scene to be observed with at least a first and a second different sensitivity, the first sensitivity being greater than the second;
   - the step of processing of the signals generated by the photosensitive device(s) itself comprises the steps consisting of:
   - determining the level of brightness of each elementary point of the image which has the first sensitivity, and of each elementary point of the image which has the second sensitivity;
   - comparing the level of brightness of each elementary point of the image which has the first sensitivity with a predetermined threshold;
   - supplying to the display device, for each elementary point of the image which has the first sensitivity and has a level of brightness lower than the predetermined threshold, the signal of the image which has the first sensitivity; and
   - supplying to the display device, for any other elementary point of the image which has the first sensitivity, an image signal which is calculated in accordance with the levels of brightness of the same elementary point in the images which have the first sensitivity and the second sensitivity, the signals of images supplied to the display device having, for each elementary point, a level of brightness equal to that of the corresponding point of the image which has the first sensitivity, when the latter has a level of brightness equal to, or lower than, the predetermined threshold,

   **characterised in that** the image signals which are supplied to the display device have, for each elementary point, a level of brightness which is calculated to be contained between the levels of brightness of the corresponding points of the images which have the first and second sensitivities, for the elementary points of the image which has the first sensitivity, the level of brightness of which is higher than the predetermined threshold, and **in that** the step of processing of the signals of images is carried out only when the image which has the first sensitivity has areas of dazzle, the presence of these areas of dazzle being determined by counting the number of points of the image which has the second sensitivity, the brightness of which is equal to a predetermined value, the processing of the signals of images being carried out only if this number is greater than a predetermined threshold.

2. Method according to claim 1, **characterised in that** the level of brightness of each point of the final image corresponding to an elementary point of the image which has the first sensitivity and has a level of brightness higher than the predetermined threshold, is calculated in accordance with the level of brightness of the corresponding elementary point of the image which has the second sensitivity.

3. Method according to claim 2, **characterised in that** the function of the level of brightness of the elementary point of the image which has the second sensitivity has the form:

$$N_3 = N_2 + (S_1 - S_2) \cdot \frac{(K - N_2)}{(K - S_2)}$$

wherein:

- $N_2$ is the level of brightness of the elementary point of the image which has the second sensitivity, corresponding to an elementary point of the image which has the first sensitivity and has a level of brightness which is higher than the predetermined threshold;
- $N_3$ is the level of brightness of the elementary point of the final image corresponding to an elementary point of the image which has the first sensitivity and has a level of brightness which is higher than the predetermined threshold;
- $S_1$ is the value of the predetermined threshold for an elementary point of the image which has the first sensitivity;
- $S_2$ is the level of brightness of the elementary point of the image which has the second sensitivity, corresponding to a point of the image which has the first sensitivity and has a level of brightness equal to $S_1$ ; and
- $K$ is the number of different levels of brightness which the photosensitive device is capable of distinguishing.

4. Method according to claim 1, **characterised in that** the signals which are supplied to the display device have, for each elementary point, a level of brightness which is:

- equal to that of the corresponding point of the image which has the first sensitivity, when the latter has a level of brightness lower than a predetermined threshold;
- equal to a weighted sum of the levels of brightness of the corresponding points of the images which have the first and second sensitivity, for each elementary point of the image which has the first sensitivity, the level of brightness of which is equal to, or higher than, the predetermined threshold.

5. Method according to claim 4, **characterised in that,** for each elementary point of the image which has the first sensitivity, the level of brightness of which is equal to, or higher than, the predetermined threshold, the level of brightness of the signal which is supplied to the display device consists of approximately 30% of the level of brightness of the image which has the second sensitivity, and 70% of the level of brightness of the image which has the first sensitivity.

6. Method according to claim 1, **characterised in that** the signals of images which are supplied to the display device have, for each elementary point, a level of brightness which is:

- equal to that of the corresponding point of the image which has the first sensitivity, when the latter has a level of brightness equal to, or lower than, the predetermined threshold;
- equal to that of the corresponding point of the image which has the second sensitivity, when the corresponding point of the image which has the first sensitivity has a level of brightness equal to a maximal value;
- calculated to be contained between the levels of brightness of the corresponding points of the images which have the first and second sensitivities, for the elementary points of the image which has the first sensitivity, the level of brightness of which is contained between the predetermined threshold and the maximal value.

7. Method according to claim 6, **characterised in that** the level of brightness is calculated by means of a linear ratio between the levels of brightness of the corresponding elementary points of the images which have the first and second sensitivities.

8. Method according to claim 7, **characterised in that** the linear ratio has the form:

$$N_{(P_{3(i,j)})} = \left( N_{(P_{1(i,j)})} * \left( \frac{N_{\max} - N_{(P_{1(i,j)})}}{N_{\max} - N_s} \right) \right) + \left( N_{(P_{2(i,j)})} * \left( 1 - \frac{N_{\max} - N_{(P_{1(i,j)})}}{N_{\max} - N_s} \right) \right)$$

wherein, for each pair of co-ordinates i and j of an elementary point:

$P_{1(i,j)}$ is an elementary point of the image which has the first sensitivity;
$P_{2(i,j)}$ is an elementary point of the image which has the second sensitivity;
$P_{3(i,j)}$ is an elementary point of the image which is displayed on the display device;
$N_{(P1(i,j))}$ is the level of brightness of the elementary point $P_{1(i,j)}$;
$N_{(P2(i,j))}$ is the level of brightness of the elementary point $P_{2(i,j)}$;
$N_{(P3(i,j))}$ is the level of brightness of the elementary point $P_{3(i,j)}$;
$N_{max}$ is the maximum level of brightness of the image which has the first sensitivity; and
$N_S$ is the level of brightness of the predetermined threshold.

9. Method according to any one of claims 1 to 8, **characterised in that** there is a single photosensitive device, which functions at a frequency which is a whole multiple of that at which the images are displayed on the display device.

10. Method according to claim 9, **characterised in that** the image which has the first sensitivity is generated by the photosensitive device which has nominal functioning, and **in that** the image which has the second sensitivity is generated by the photosensitive device which has modified functioning.

11. Method according to claim 10, **characterised in that** the image which has the second sensitivity is under-exposed.

12. Method according to claim 11, **characterised in that** the under-exposure is obtained by means of electronic control of the photosensitive device, or by means of a shutter which has two unequal openings which appear in succession in front of the photosensitive device in synchronism with its periods of nominal functioning and its periods of modified functioning.

13. Method according to any one of claims 1 to 8, **characterised in that** the images which have first and second sensitivities are obtained by means of different photosensitive devices.

14. Method according to claim 13, **characterised in that** the photosensitive devices are synchronised in order to supply the means for processing the signal of images with signals of images comprising elementary points which can be made to correspond both in time and space.

15. Method according to claim 14, **characterised in that** the different photosensitive devices have the same technology, one of them having nominal functioning characteristics, in order to provide an image which has first sensitivity, and the other one having modified functioning characteristics, in order to provide an image which has second sensitivity.

16. Method according to claim 15, **characterised in that** the image which has second sensitivity is obtained by means of electronic control of the photosensitive device, in order to obtain an under-exposed image.

17. Method according to claim 13, **characterised in that** the different photosensitive devices have different technologies, and provide images with different sensitivities.

18. Method according to claim 1, **characterised in that,** when the image which has first sensitivity is free from areas of dazzle, the image signal which is supplied to the display device is that of the image which has first sensitivity.

19. Method according to claim 1, **characterised in that that** brightness of the scene to be observed is measured by a detector.

20. Method according to claim 19, **characterised in that** the detector consists of a counter of the number of elementary points of the image which has second sensitivity, the brightness of which is equal to a predetermined value.

**Patentansprüche**

1. Verfahren zur Echtzeit-Verarbeitung eines für ein Bild repräsentativen Signals, das von wenigstens einer lichtempfindlichen Vorrichtung erzeugt wird, um von einer zu beobachtenden Szene, die eine hohe Dynamik zwischen Signalen, die den dunkelsten Bereichen entsprechen, und denen, die den hellsten Bereichen entsprechen, aufweist, ein Bild ohne Blendbereiche zu liefern, wobei das Verfahren die folgenden Schritte umfasst:

   - Erzeugen eines reellen Bildes der zu beobachtenden Szene auf der oder den lichtempfindlichen Vorrichtungen mit Hilfe eines optischen Systems,
   - Steuern der lichtempfindlichen Vorrichtung(en), damit diese pro Sekunde eine erste vorbestimmte Anzahl von Bildsignalen der zu beobachtenden Szene erzeugt bzw. erzeugen,
   - Sammeln der von der bzw. den lichtempfindlichen Vorrichtungen erzeugten Bildsignale,
   - Verarbeiten der von der bzw. den lichtempfindlichen Vorrichtungen erzeugten Bildsignale,
   - Umwandeln der verarbeiteten Signale in Videosignale,
   - Liefern der Videosignale an eine Anzeigevorrichtung,
   - Anzeigen einer zweiten vorbestimmten Anzahl von Bildern pro Sekunde auf der Anzeigevorrichtung, welche den verarbeiteten Bildsignalen entsprechen,
   - wobei die Steuerung der lichtempfindlichen Vorrichtung(en) das Erzeugen von Bildsignalen der gleichen zu beobachtenden Szene mit wenigstens einer ersten und einer zweiten unterschiedlichen Empfindlichkeit umfasst, wobei die erste Empfindlichkeit höher ist als die zweite,
   - wobei die Verarbeitung der von der bzw. den lichtempfindlichen Vorrichtungen erzeugten Signale selbst die folgenden Schritte umfasst:
   - Bestimmen des Heiligkeitsgrades eines jeden Einzelpunktes des Bildes mit erster Empfindlichkeit und eines jeden Einzelpunktes des Bildes mit zweiter Empfindlichkeit,
   - Vergleichen des Helligkeitsgrads eines jeden Einzelpunktes des Bildes mit erster Empfindlichkeit mit einem vorbestimmten Schwellenwert,
   - Liefern des Bildsignals mit erster Empfindlichkeit an die Anzeigevorrichtung für jeden Einzelpunkt des Bildes mit erster Empfindlichkeit, der einen Helligkeitsgrad kleiner als der vorbestimmte Schwellenwert hat, und
   - Liefern eines in Abhängigkeit der Heiligkeitsgrade desselben Einzelpunktes in den Bildern mit erster Empfindlichkeit und mit zweiter Empfindlichkeit berechneten Bildsignals an die Anzeigevorrichtung für jeden anderen Einzelpunkt des Bildes mit erster Empfindlichkeit,

   wobei die an die Anzeigevorrichtung gelieferten Bildsignale für jeden Einzelpunkt einen Helligkeitsgrad gleich demjenigen des jeweiligen Punktes des Bildes mit erster Empfindlichkeit haben, wenn dieser einen Helligkeitsgrad kleiner oder gleich dem vorbestimmten Schwellenwert hat,
   **dadurch gekennzeichnet, dass** die an die Anzeigevorrichtung gelieferten Bildsignale für jeden Einzelpunkt einen Helligkeitsgrad haben, der dazu berechnet ist, zwischen den Heitigkeitsgraden der jeweiligen Punkte der Bilder mit erster und mit zweiter Empfindlichkeit für die Einzelpunkte des Bildes mit erster Empfindlichkeit zu liegen, deren Helligkeitsgrad größer ist als der vorbestimmte Schwellenwert,
   und dass die Verarbeitung der Bildsignale nur erfolgt, wenn das Bild mit erster Empfindlichkeit Blendbereiche aufweist, wobei das Vorhandensein dieser Blendbereiche **dadurch** bestimmt ist, dass die Anzahl der Punkte des Bildes mit zweiter Empfindlichkeit ermittelt wird, deren Helligkeit gleich einem vorbestimmten Wert ist, wobei die Verarbeitung der Bildsignale nur erfolgt, wenn diese Anzahl über einem vorbestimmten Schwellenwert liegt.

2. Verfahren nach Anspruch 1,
   **dadurch gekennzeichnet, dass** der Helligkeitsgrad eines jeden Punktes des Endbildes, der einem Einzelpunkt des Bildes mit erster Empfindlichkeit entspricht, der einen Helligkeitsgrad größer als der vorbestimmte Schwellenwert hat, in Abhängigkeit des Helligkeitsgrades des jeweiligen Einzelpunktes des Bildes mit zweiter Empfindlichkeit berechnet wird.

3. Verfahren nach Anspruch 2,
   **dadurch gekennzeichnet, dass** die Funktion des Helligkeitsgrades des Einzelpunktes des Bildes mit zweiter Empfindlichkeit wie folgt lautet:

$$N_3 = N_2 + (S_1 - S_2) \bullet \frac{(K - N_2)}{(K - S_2)}$$

wobei:

- $N_2$ der Helligkeitsgrad des Einzelpunktes des Bildes mit zweiter Empfindlichkeit ist, der einem Einzelpunkt des Bildes mit erster Empfindlichkeit entspricht, der einen Helligkeitsgrad größer als der vorbestimmte Schwellenwert hat,
- $N_3$ der Helligkeitsgrad des Einzelpunktes des Endbildes ist, der einem Einzelpunkt des Bildes mit erster Empfindlichkeit entspricht, der einen Helligkeitsgrad größer als der vorbestimmte Schwellenwert hat,
- $S_1$ der vorbestimmte Schwellenwert für einen Einzelpunkt des Bildes mit erster Empfindlichkeit ist,
- $S_2$ der Helligkeitsgrad des Einzelpunktes des Bildes mit zweiter Empfindlichkeit ist, der einem Punkt des Bildes mit erster Empfindlichkeit entspricht, der einen Helligkeitsgrad gleich $S_1$ hat, und
- K die Anzahl der unterschiedlichen Helligkeitsgrade ist, die die lichtempfindliche Vorrichtung zu unterscheiden vermag.

**4.** Verfahren nach Anspruch 1,
**dadurch gekennzeichnet, dass** die an die Anzeigevorrichtung gelieferten Signale für jeden Einzelpunkt einen Helligkeitsgrad haben, der

- gleich demjenigen des jeweiligen Punktes des Bildes mit erster Empfindlichkeit ist, wenn dieser einen Helligkeitsgrad kleiner als der vorbestimmte Schwellenwert hat,
- gleich einer gewichteten Summe der Helligkeitsgrade der jeweiligen Punkte der Bilder mit erster und mit zweiter Empfindlichkeit für jeden Einzelpunkt des Bildes mit erster Empfindlichkeit ist, dessen Helligkeitsgrad größer oder gleich dem vorbestimmten Schwellenwert ist.

**5.** Verfahren nach Anspruch 4,
**dadurch gekennzeichnet, dass** der Helligkeitsgrad des an die Anzeigevorrichtung gelieferten Signals für jeden Einzelpunkt des Bildes mit erster Empfindlichkeit, dessen Helligkeitsgrad größer oder gleich dem vorbestimmten Schwellenwert ist, aus etwa 30 % des Helligkeitsgrades des Bildes mit zweiter Empfindlichkeit und aus 70 % des Helligkeitsgrades des Bildes mit erster Empfindlichkeit gebildet ist.

**6.** Verfahren nach Anspruch 1,
**dadurch gekennzeichnet, dass** die an die Anzeigevorrichtung gelieferten Bildsignale für jeden Einzelpunkt einen Helligkeitsgrad haben, der

- gleich demjenigen des jeweiligen Punktes des Bildes mit erster Empfindlichkeit ist, wenn dieser einen Helligkeitsgrad kleiner oder gleich dem vorbestimmten Schwellenwert hat,
- gleich demjenigen des jeweiligen Punktes des Bildes mit zweiter Empfindlichkeit ist, wenn der jeweilige Punkt des Bildes mit erster Empfindlichkeit einen Helligkeitsgrad gleich einem Maximalwert hat,
- dazu berechnet ist, zwischen den Helligkeitsgraden der jeweiligen Punkte der Bilder mit erster und mit zweiter Empfindlichkeit für die Einzelpunkte des Bildes mit erster Empfindlichkeit zu liegen, deren Helligkeitsgrad zwischen dem vorbestimmten Schwellenwert und dem Maximalwert liegt.

**7.** Verfahren nach Anspruch 6,
**dadurch gekennzeichnet dass** der Helligkeitsgrad mit Hilfe einer linearen Relation zwischen den Helligkeitsgraden der jeweiligen Einzelpunkte der Bilder mit erster und mit zweiter Empfindlichkeit berechnet wird.

**8.** Verfahren nach Anspruch 7,
**dadurch gekennzeichnet, dass** die lineare Relation wie folgt lautet:

$$N_{(P_{3(i,j)})} = \left( N_{(P_{1(i,j)})} \bullet \left( \frac{N_{\max} - N_{(P_{1(i,j)})}}{N_{\max - N_S}} \right) \right) + \left( N_{(P_{2(i,j)})} \bullet \left( 1 - \frac{N_{\max} - N_{(P_{1(i,j)})}}{N_{\max} - N_S} \right) \right)$$

wobei für jedes Koordinatenpaar i und j eines Einzelpunktes:

$P_{1(i,j)}$ ein Einzelpunkt des Bildes mit erster ist,
$P_{2(i,j)}$ ein Einzelpunkt des Bildes mit zweiter Empfindlichkeit ist,
$P_{3(i,j)}$ ein Einzelpunkt des auf der Anzeigevorrichtung angezeigten Bildes ist,

$N_{(P1(i,j))}$ der Helligkeitsgrad des Einzelpunktes $P_{1(i,j)}$ ist,
$N_{(P2(i,j))}$ der Helligkeitsgrad des Einzelpunktes $P_{2(i,j)}$ ist,
$N_{(P3(i,j))}$ der Helligkeitsgrad des Einzelpunktes $P_{3(i,j)}$ ist,
$N_{max}$ der maximale Helligkeitsgrad des Bildes mit erster Empfindlichkeit ist, und
$N_S$ der Helligkeitsgrad des vorbestimmten Schwellenwertes ist.

9. Verfahren nach einem der Ansprüche 1 bis 8,
**dadurch gekennzeichnet, dass** die lichtempfindliche Vorrichtung einmalig vorhanden ist und bei einer Frequenz arbeitet, die ein ganzes Vielfaches derjenigen ist, mit der die Bilder auf der Anzeigevorrichtung angezeigt werden.

10. Verfahren nach Anspruch 9,
**dadurch gekennzeichnet, dass** das Bild mit erster Empfindlichkeit von der lichtempfindlichen Vorrichtung in einem Nominalbetrieb erzeugt wird, und dass das Bild mit zweiter Empfindlichkeit von der lichtempfindlichen Vorrichtung in einem geänderten Betrieb erzeugt wird.

11. Verfahren nach Anspruch 10,
**dadurch gekennzeichnet, dass** das Bild mit zweiter Empfindlichkeit unterbelichtet ist.

12. Verfahren nach Anspruch 11,
**dadurch gekennzeichnet, dass** die Unterbelichtung durch eine elektronische Steuerung der lichtempfindlichen Vorrichtung oder durch einen Verschluss mit zwei ungleichen Öffnungen erzielt wird, die nacheinander vor der lichtempfindlichen Vorrichtung synchron zu deren Nominalbetriebsphasen und deren geänderten Betriebsphasen erscheinen.

13. Verfahren nach einem der Ansprüche 1 bis 8,
**dadurch gekennzeichnet, dass** die Bilder mit erster und mit zweiter Empfindlichkeit mit Hilfe verschiedener lichtempfindlicher Vorrichtungen erhalten werden.

14. Verfahren nach Anspruch 13,
**dadurch gekennzeichnet, dass** die lichtempfindlichen Vorrichtungen synchronisiert sind, um an die Mittel zur Verarbeitung des Bildsignals Bildsignale zu liefern, die Einzelpunkte aufweisen, die sowohl zeitlich als auch räumlich in Übereinstimmung bringbar sind.

15. Verfahren nach Anspruch 14,
**dadurch gekennzeichnet, dass** die verschiedenen lichtempfindlichen Vorrichtungen eine gleiche Technik aufweisen, wobei die eine nominale Betriebsmerkmale hat, um ein Bild mit erster Empfindlichkeit zu erzeugen, und die andere geänderte Betriebsmerkmale hat, um ein Bild mit zweiter Empfindlichkeit zu liefern.

16. Verfahren nach Anspruch 15,
**dadurch gekennzeichnet, dass** das Bild mit zweiter Empfindlichkeit durch eine elektronische Steuerung der lichtempfindlichen Vorrichtung erzielt wird, um ein unterbelichtetes Bild zu erhalten.

17. Verfahren nach Anspruch 13,
**dadurch gekennzeichnet, dass** die verschiedenen lichtempfindlichen Vorrichtungen eine unterschiedliche Technik aufweisen und Bilder mit unterschiedlichen Empfindlichkeiten liefern.

18. Verfahren nach Anspruch 1,
**dadurch gekennzeichnet, dass** das an die Anzeigevorrichtung gelieferte Bildsignal das des Bildes mit erster Empfindlichkeit ist, wenn das Bild mit erster Empfindlichkeit keine Blendbereiche hat.

19. Verfahren nach Anspruch 1,
**dadurch gekennzeichnet, dass** die Helligkeit der zu beobachtenden Szene von einem Sensor gemessen wird.

20. Verfahren nach Anspruch 19,
**dadurch gekennzeichnet, dass** der Sensor von einer Einrichtung zum Zählen der Anzahl der Einzelpunkte des Bildes mit zweiter Empfindlichkeit gebildet ist, deren Helligkeit gleich einem vorbestimmten Wert ist.

FIG.1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2565753 A
- EP 1237363 A

- FR 2660822 A